# EUROPEAN PATENT SPECIFICATION

(11) **EP 0 912 388 B1**
(45) Date of publication and mention of the grant of the patent: **15.03.2000**
(21) Application number: 97930644.6
(22) Date of filing: 07.07.1997
(51) Int. Cl.: B62D 29/04, B62D 65/00

(54) **A METHOD OF MANUFACTURING VEHICLE BODY AND A VEHICLE BODY STRUCTURE**
VERFAHREN ZUR HERSTELLUNG EINES FAHRZEUGAUFBAUS UND AUFBAUSTRUKTUR EINES FAHRZEUGES
PROCEDE DE FABRICATION D'UNE CARROSSERIE DE VEHICULE ET STRUCTURE DE CARROSSERIE DE VEHICULE

(30) Priority: 18.07.1996 GB 9615124
(43) Date of publication of application: 06.05.1999
(73) Proprietor: ROVER GROUP LIMITED, Warwick, Warwickshire CV34 6RG (GB)
(72) Inventor: NEWMAN, Nicholas, Cannon Park, Coventry CV4 7DU (GB)
(74) Representative: Moffat, John Andrew
(86) International application number: GB9701832
(87) International publication number: WO9803388

(56) References cited:
- EP-A- 0 078 174
- EP-A- 0 115 103
- EP-A- 0 285 974
- EP-A- 0 598 428
- DE-A- 4 334 269

## Description

The present invention relates to the manufacture of vehicles, and in particular to the manufacture of plastics body panels and the assembly of vehicles including such panels.

It is a known problem with polypropylene that it is very difficult to attach it firmly to other materials. This problem needs to be overcome if, for example, vehicles are to be produced having subframes of metal, such as aluminium, and body panels of polypropylene.

It has been found, according to the present invention, that it is possible to bond polypropylene to certain other materials by the application of heat and pressure.

The present invention therefore provides a method of manufacturing a vehicle body including the steps of providing a layer of reinforced polypropylene and a bonding element of a different material, and applying heat and pressure to the polypropylene layer and the bonding element thereby to bond the element to the layer, and attaching the bonding element to a support structure for the panel.

Since it is known to apply heat and pressure to polypropylene layers during the manufacture of panels, both for bonding several layers of polypropylene together and for shaping the panel, the present invention can easily be carried out in conjunction with these known techniques.

Preferably, therefore, a plurality of said layers are provided and are bonded together by the application of heat and pressure, and the bonding element is bonded to at least one of said layers simultaneously with the bonding together of said layers.

Preferably, in addition or alternatively, the method includes the step of shaping the layer or layers by the application of heat and pressure, and the bonding element is bonded to at least one of said layers simultaneously with said shaping.

The material of the bonding element can be chosen so as to be easily attachable to the support structure, for example if the support structure is formed of aluminium, the bonding element can be also.

The present invention further provides a vehicle body panel comprising a layer of reinforced polypropylene and a bonding element of a different material suitable for attachment to a support structure for the panel, the polypropylene layer and the bonding element having been bonded together by the application of heat and pressure to the polypropylene layer and the bonding element.

The present invention still further provides a vehicle body including a panel according to the invention and a support structure, the panel being attached to the support structure by attachment of the bonding element to the support structure.

The attachment of the bonding element to the support structure is preferably by some form of bonding, and may be, for example, by means of an adhesive or by welding.

Preferred embodiments of the present invention will now be described by way of example only with reference to the accompanying drawings in which:
Figure 1 shows the components of a body panel according to a first embodiment of the invention;
Figure 2 shows part of a vehicle including the body panel of Figure 1; and
Figure 3 shows the components of a body panel according to a second embodiment of the invention.

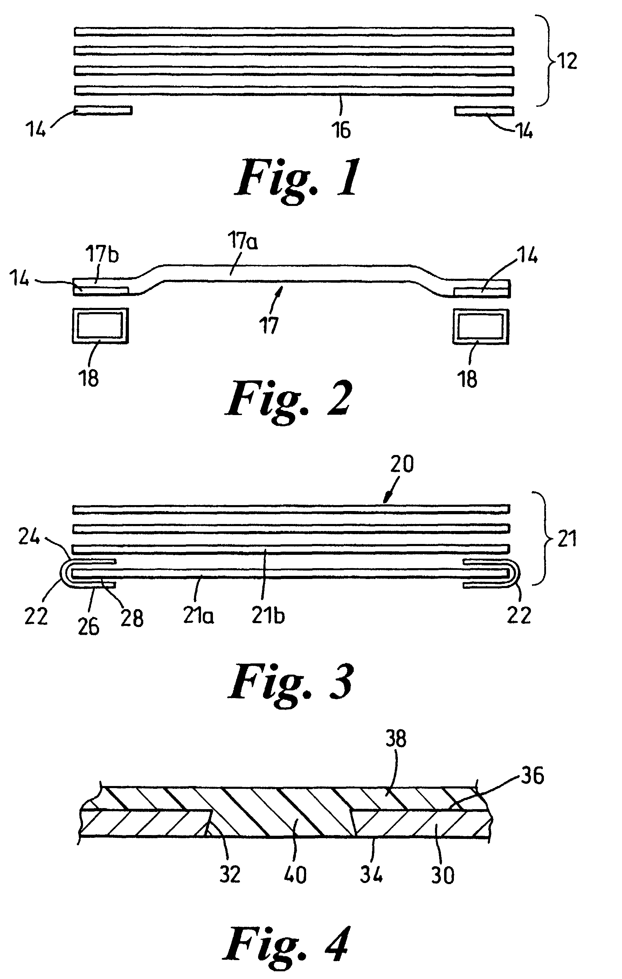

Referring to Figure 1, a vehicle roof panel is formed from four layers 12 of unidirectional glass reinforced polypropylene, known as glass mat thermoplastics (G.M.T.) such as Plytron (T.M.) and a number of patches 14 of aluminium foil. The G.M.T. layers 12 are placed together, and then the aluminium foil patches 14 placed in the required position on the outer surface 16 of one of the outermost G.M.T. layers 12. This assembly is then heated to about 180°C and compression moulded at a pressure of about 200 bar to the shape required, as shown in Figure 2. This results in the layers of G.M.T. 12 being bonded together and shaped to form a non-planar panel 17, and the aluminium foil patches 14 becoming attached to the G.M.T. on the surface of the panel. The panel 17 comprises a central curved portion 17a, and a flat flange 17b around its edge, to which the foil patches 14 are attached. The foil patches 14 are embedded in the G.M.T. so that the surface of the combined structure is substantially flat. The panel 17 is then attached to a frame 18 formed from extruded aluminium. This is done by applying adhesive to the aluminium patches 14 and bringing them into contact with the frame 18 so that the frame and the aluminium patches become bonded together.

It has been found that the bond formed between the aluminium patches 14 and the G.M.T. 12 is sufficiently strong for the roof panel to be used on a vehicle.

Referring to Figure 3, in a second embodiment of the invention, a roof panel 20 is formed from four layers 21 of unidirectional G.M.T. and a number of sections of metal braid 22. The G.M.T. layers are placed together, and each of the sections of metal braid 22 is arranged so that part 24 of it is between one of the outermost G.M.T. layers 21a and the next one 21b, and part 26 of it protrudes beyond their edges. The protruding edges 26 of the braid 22 are then folded round the outermost G.M.T. layer 21a and held against its outermost surface 28. The assembly is then heated and compression moulded to form the roof panel 20. This bonds the G.M.T. layers together, traps part 24 of the braid sections 22 between the two outermost layers of G.M.T. 21a, 21b, and bonds the other part 26 of the braid sections 22 to the outermost surface 28 of the panel 20. This panel can then be attached to an extruded aluminium frame by adhesive applied to the braid sections 22.

The use of braid can increase the strength of the bond between the bonding element and the G.M.T. because, when the braid is embedded in the G.M.T., the polypropylene in the G.M.T. envelopes some of the strands of the braid.

As an alternative the braid bonding element can be welded to the support frame, the heat for the welding being produced by passing a large electric current through the bonding element.

As an alternative to the compression moulding described above, it is possible to form the panel by vacuum bagging. This comprises placing the components of the panel in a flexible bag at the required temperature, which will be about the same as for compression moulding, and sucking air out of the bag to create a vacuum inside it. This results in compression of the panel. The pressure produced on the panel can be about 1 bar.

It will be appreciated that the number of layers of G.M.T. will vary depending on the thickness and strength required of the panel.

It will also be appreciated that there are other materials, such as polyurethane, which are substantially easier to attach to aluminium than polypropylene. The aluminium foil patches in the first embodiment of the invention can therefore be replaced by strips of polyurethane, the production of the roof panel being otherwise substantially the same.

Referring to Figure 4, in a third embodiment of the invention aluminium sheets 30 are used as the bonding elements. These have holes 32 through them which are tapered, being wider on a first side 34 of the sheet 30 than an the second side 36. The aluminium sheets 30 are placed such that their second side is in contact with a number of random G.M.T. layers 38, and the panel is compression moulded as in the first embodiment. During the moulding process the hot molten plastic of the G.M.T. layers flows into the holes 32. When it sets the shape of the holes 32 means that the set polypropylene 40 which has flowed into the holes is keyed into, or interlocked with, the aluminium sheet, thus improving the strength of the join between the aluminium sheet and the G.M.T.

## Claims

1. A method of manufacturing a vehicle body panel characterized in that it includes the steps of providing a layer (12) of reinforced polypropylene and a bonding element (14) of a different material, and bonding the bonding element (14) to the layer (12) solely by applying both heat and pressure to the polypropylene layer (12) and the bonding element (14).

2. A method according to claim 1 wherein a plurality of said layers (12) are provided and are bonded together by the application of both heat and pressure, and the bonding element (14) is bonded to at least one of said layers simultaneously with the bonding together of said layers.

3. A method according to claim 1 or claim 2 wherein the layer or layers are shaped by the application of heat and pressure, and the bonding element (14) is bonded to at least one of said layers simultaneously with the shaping of the layer or layers.

4. A method according to any foregoing claim wherein the bonding element is bonded to said layer or layers during compression moulding of said layer or layers.

5. A method according to any foregoing claim wherein the reinforced polypropylene comprises glass reinforced polypropylene.

6. A method according to claim 5 wherein the reinforced polypropylene comprises unidirectional glass reinforced polypropylene.

7. A method according to any foregoing claim wherein the bonding element (14) is formed of aluminium.

8. A method according to any foregoing claim wherein the bonding element (14) is formed of a braided material.

9. A method according to any one of claims 1 to 6 wherein the bonding element (14) is formed of polyurethane.

10. A method according to any foregoing claim wherein the bonding element (14) comprises a sheet having an interlocking portion (32) which is shaped such that, when said heat and pressure are applied, polypropylene (40) from the polypropylene layer or layers will flow into engagement with the interlocking portion and become interlocked therewith on setting.

11. A vehicle body panel characterized in that it comprises a layer (12) of reinforced polypropylene and a bonding element (14) of a different material suitable for attachment to a support structure for the panel, the polypropylene layer and the bonding element (14) having been bonded together solely by the application of both heat and pressure to the polypropylene layer (12) and the bonding element (14).

12. A panel according to claim 11 formed from a plurality of said layers which have been bonded together by the application of heat and pressure, wherein the bonding element (14) has been bonded to at least one of said layers (12) simultaneously with the bonding together of the layers (12).

13. A panel according to claim 11 or claim 12 wherein the polypropylene layer has been shaped by the application of heat and pressure, and the bonding element has been bonded to the polypropylene layer simultaneously with the shaping.

14. A panel according to claim 12 or claim 13 wherein the bonding element has been bonded to the polypropylene layer during compression moulding of said layer or layers.

15. A panel according to any one of claims 15 to 18 wherein the reinforced polypropylene comprises glass reinforced polypropylene.

16. A panel according to claim 15 wherein the reinforced polypropylene comprises unidirectional glass reinforced polypropylene.

17. A panel according to any one of claims 11 to 16 wherein the bonding element (14) is formed of aluminium.

18. A panel according to any one of claims 11 to 17 wherein the bonding element (14) is formed of a braided material.

19. A panel according to any one of claims 11 to 16 wherein the bonding element (14) is formed of polyurethane.

20. A panel according to any one of claims 11 to 19 wherein the bonding element (14) comprises a sheet having an interlocking portion (32) which is interlocked with polypropylene from the polypropylene layers.

21. A vehicle body characterized in that it includes a panel (17) according to any one of claims 11 to 20 and a support structure (18), the panel (17) being attached to the support structure (18) by attachment of the bonding element (14) to the support structure.

22. A body according to claim 21 wherein the bonding element (14) is attached to the support structure (18) by bonding.

23. A body according to claim 26 wherein the bonding element (14) is attached to the support structure (18) by means of adhesive.

24. A body according to claim 22 wherein the bonding element (14) is attached to the support structure (18) by welding.

25. A body according to any one of claims 21 to 24 wherein the support structure (18) is formed of aluminium.

## Patentansprüche

1. Verfahren zur Herstellung eines Fahrzeugkarosserieteils, dadurch gekennzeichnet, daß man eine Schicht (12) aus verstärktem Polypropylen und ein Verbindungselement (14) aus einem anderen Material bereitstellt und das Verbindungselement (14) ausschließlich durch Einwirkung von Wärme und Druck auf die Polypropylenschicht (12) und das Verbindungselement (14) mit der Schicht (12) verbindet.

2. Verfahren nach Anspruch 1, bei dem man mehrere dieser Schichten (12) bereitstellt und durch Einwirkung von Wärme und Druck miteinander verbindet und das Verbindungselement (14) gleichzeitig mit dem Miteinanderverbinden der Schichten mit mindestens einer der Schichten verbindet.

3. Verfahren nach Anspruch 1 oder 2, bei dem man die Schicht(en) durch Einwirkung von Wärme und Druck formt und das Verbindungselement (14) gleichzeitig mit dem Formen der Schicht(en) mit mindestens einer der Schichten verbindet.

4. Verfahren nach einem der vorhergehenden Ansprüche, bei dem man das Verbindungselement beim Formpressen der Schicht(en) mit der Schicht bzw. den Schichten verbindet.

5. Verfahren nach einem der vorhergehenden Ansprüche, bei dem man als verstärktes Polypropylen glasverstärktes Polypropylen einsetzt.

6. Verfahren nach Anspruch 5, bei dem man als verstärktes Polypropylen unidirektional glasverstärktes Polypropylen einsetzt.

7. Verfahren nach einem der vorhergehenden Ansprüche, bei dem man ein Verbindungselement (14) aus Aluminium einsetzt.

8. Verfahren nach einem der vorhergehenden Ansprüche, bei dem man ein Verbindungselement (14) aus geflochtenem Material einsetzt.

9. Verfahren nach einem der Ansprüche 1 bis 6, bei dem man ein Verbindungselement (14) aus Polyurethan einsetzt.

10. Verfahren nach einem der vorhergehenden Ansprüche, bei dem man ein Verbindungselement (14) aus einem Blech mit einem Verriegelungsteil (32) verwendet, das so geformt ist, daß bei der Einwirkung von Wärme und Druck Polypropylen (40) aus der Polypropylenschicht bzw. den Polypropylenschichten mit dem Verriegelungsteil in Eingriff fließt und beim Festwerden damit verriegelt wird.

11. Fahrzeugkarosserieteil, dadurch gekennzeichnet, daß es eine Schicht (12) aus verstärktem Polypropylen und ein Verbindungselement (14) aus einem anderen Material, das zum Anbringen des Karosserieteils an einer Tragstruktur geeignet ist, enthält, wobei die Polypropylenschicht und das Verbindungselement (14) ausschließlich durch Einwirkung von Wärme und Druck auf die Polypropylenschicht (12) und das Verbindungselement (14) miteinander verbunden worden sind.

12. Karosserieteil nach Anspruch 11 aus mehreren der durch Einwirkung von Wärme und Druck miteinander verbundenen Schichten, bei dem das Verbindungselement (14) gleichzeitig mit dem Miteinanderverbinden der Schichten (12) mit mindestens einer der Schichten verbunden worden ist.

13. Karosserieteil nach Anspruch 11 oder 12, bei dem die Polypropylenschicht durch Einwirkung von Wärme und Druck geformt worden ist und das Verbindungselement gleichzeitig mit dem Formen mit der Polypropylenschicht verbunden worden ist.

14. Karosserieteil nach Anspruch 12 oder 13, bei dem das Verbindungselement beim Formpressen der Schicht(en) mit der Polypropylenschicht verbunden worden ist.

15. Karosserieteil nach einem der Ansprüche 11 bis 14, bei dem es sich bei dem verstärkten Polypropylen um glasverstärktes Polypropylen handelt.

16. Karosserieteil nach-Anspruch 15, bei dem es sich bei dem verstärkten Polypropylen um unidirektional glasverstärktes Polypropylen handelt.

17. Karosserieteil nach einem der Ansprüche 11 bis 16, bei dem das Verbindungselement (14) aus Aluminium besteht.

18. Karosserieteil nach einem der Ansprüche 11 bis 17, bei dem das Verbindungselement (14) aus geflochtenem Material besteht.

19. Karosserieteil nach einem der Ansprüche 11 bis 16, bei dem das Verbindungselement (14) aus Polyurethan besteht.

20. Karosserieteil nach einem der Ansprüche 11 bis 19, bei dem das Verbindungselement (14) ein Blech mit einem Verriegelungsteil (32), der mit Polypropylen aus den Polypropylenschichten verriegelt ist, umfaßt.

21. Fahrzeugkarosserie, dadurch gekennzeichnet, daß sie ein Karosserieteil (17) nach einem der Ansprüche 11 bis 20 und eine Tragstruktur (18) enthält, wobei das Karosserieteil (17) dadurch an der Tragstruktur (18) angebracht ist, daß das Verbindungselement (14) an der Tragstruktur angebracht ist.

22. Karosserie nach Anspruch 21, bei der das Verbindungselement (14) durch Verbinden an der Tragstruktur (18) angebracht ist.

23. Karosserie nach Anspruch 22, bei der das Verbindungselement (14) mit Hilfe eines Klebstoffs an der Tragstruktur (18) angebracht ist.

24. Karosserie nach Anspruch 22, bei der das Verbindungselement (14) durch Schweißen an der Tragstruktur (18) angebracht ist.

25. Karosserie nach einem der Ansprüche 21 bis 24, bei der die Tragstruktur (18) aus Aluminium besteht.

## Revendications

1. Procédé de fabrication d'un panneau de carrosserie de véhicule, caractérisé en ce qu'il comprend les étapes de fourniture d'une couche (12) de polypropylène renforcé et d'un élément de liaison (14) d'un matériau différent, et la liaison de l'élément de liaison (14) à la couche (12) uniquement par l'application à la fois de chaleur et de pression à la couche de polypropylène (12) et à l'élément de liaison (14).

2. Procédé suivant la revendication 1, dans lequel une pluralité desdites couches (12) sont fournies et sont liées ensemble par l'application à la fois de chaleur et de pression, et l'élément de liaison (14) est lié à au moins une desdites couches simultanément avec la liaison ensemble desdites couches.

3. Procédé suivant la revendication 1 ou la revendication 2, dans lequel la couche ou les couches sont mises en forme par l'application de chaleur et de pression, et l'élément de liaison (14) est lié à au moins une desdites couches simultanément avec la mise en forme de la couche ou des couches.

4. Procédé suivant l'une quelconque des revendications précédentes, dans lequel l'élément de liaison est lié à ladite couche ou auxdites couches pendant le moulage par compression de ladite couche ou desdites couches.

5. Procédé suivant l'une quelconque des revendications précédentes, dans lequel le polypropylène renforcé comprend un polypropylène renforcé par des fibres de verre.

6. Procédé suivant la revendication 5, dans lequel le polypropylène renforcé comprend un polypropylène renforcé par des fibres de verre unidirectionnel.

7. Procédé suivant l'une quelconque des revendications précédentes, dans lequel l'élément de liaison (14) est formé d'aluminium.

8. Procédé suivant l'une quelconque des revendications précédentes, dans lequel l'élément de liaison (14) est formé d'un matériau tressé.

9. Procédé suivant l'une quelconque des revendications 1 à 6, dans lequel l'élément de liaison (14) est formé de polyuréthanne.

10. Procédé suivant l'une quelconque des revendications précédentes, dans lequel l'élément de liaison (14) comprend une feuille ayant une partie de blocage (32) qui est mise en forme de sorte que, lorsque lesdites chaleur et pression sont appliquées, du polypropylène (40) de la couche ou des couches de polypropylène s'écoule en prise avec la partie de blocage et devienne bloqué avec celle-ci pendant le durcissement.

11. Panneau de carrosserie de véhicule, caractérisé en ce qu'il comprend une couche (12) de polypropylène renforcé et un élément de liaison (14) d'un matériau différent approprié pour une fixation à une structure de support pour le panneau, la couche de polypropylène et l'élément de liaison (14) ayant été liés ensemble uniquement par l'application à la fois de chaleur et de pression à la couche de polypropylène (12) et à l'élément de liaison (14).

12. Panneau suivant la revendication 11, formé d'une pluralité desdites couches qui ont été liées ensemble par l'application de chaleur et de pression, dans lequel l'élément de liaison (14) a été lié à au moins une desdites couches (12) simultanément avec la liaison ensemble des couches (12).

13. Panneau suivant la revendication 11 ou la revendication 12, dans lequel la couche de polypropylène a été mise en forme par l'application de chaleur et de pression, et l'élément de liaison a été lié à la couche de polypropylène simultanément avec la mise en forme.

14. Panneau suivant la revendication 12 ou la revendication 13, dans lequel l'élément de liaison a été lié à la couche de polypropylène pendant le moulage par compression de ladite couche ou desdites couches.

15. Panneau suivant l'une quelconque des revendications 15 à 18, dans lequel le polypropylène renforcé comprend du polypropylène renforcé par des fibres de verre.

16. Panneau suivant la revendication 15, dans lequel le polypropylène renforcé comprend du polypropylène renforcé par des fibres de verre unidirectionnel.

17. Panneau suivant l'une quelconque des revendications 11 à 16, dans lequel l'élément de liaison (14) est formé d'aluminium.

18. Panneau suivant l'une quelconque des revendications 11 à 17, dans lequel l'élément de liaison (14) est formé d'un matériau tressé.

19. Panneau suivant l'une quelconque des revendications 11 à 16, dans lequel l'élément de liaison (14) est formé de polyuréthanne.

20. Panneau suivant l'une quelconque des revendications 11 à 19, dans lequel l'élément de liaison (14) comprend une feuille ayant une partie de blocage (32) qui est bloquée avec du polypropylène des couches de polypropylène.

21. Carrosserie de véhicule, caractérisée en ce qu'elle comprend un panneau (17) suivant l'une quelconque des revendications 11 à 20 et une structure de support (18), le panneau (17) étant attaché à la structure de support (18) par fixation de l'élément de liaison (14) à la structure de support.

22. Carrosserie suivant la revendication 21, dans laquelle l'élément de liaison (14) est attaché à la structure de support (18) par liaison.

23. Carrosserie suivant la revendication 26, dans laquelle l'élément de liaison (14) est attaché à la structure de support (18) au moyen d'un adhésif.

24. Carrosserie suivant la revendication 22, dans laquelle l'élément de liaison (14) est attaché à la structure de support (18) par soudure.

25. Carrosserie suivant l'une quelconque des revendications 21 à 24, dans laquelle la structure de support (18) est formée d'aluminium.
